# FASCICULE DE BREVET EUROPEEN

(11) **EP 3 931 691 B1**
(45) Date de publication et mention de la délivrance du brevet: **30.08.2023**
(21) Numéro de dépôt: 20721284.6
(22) Date de dépôt: 02.03.2020
(51) Int. Cl.: G06F 9/451, H04M 1/00, H04W 4/00, H04M 3/00, H04M 15/00, H04W 4/24

(54) **PROCÉDÉ DE DÉTECTION DE L'ABOUTISSEMENT D'UN APPEL TÉLÉPHONIQUE INITIÉ DEPUIS UN NAVIGATEUR INTERNET D'UN APPAREIL DE COMMUNICATION MOBILE**
VERFAHREN ZUR ERKENNUNG DER BEENDIGUNG EINES TELEFONANRUFES, DER VON EINEM WEB-BROWSER EINER MOBILEN KOMMUNIKATIONSVORRICHTUNG INITIIERT WURDE
METHOD FOR DETECTING THE COMPLETION OF A TELEPHONE CALL INITIATED FROM A WEB BROWSER OF A MOBILE COMMUNICATION DEVICE

(30) Priorité: 01.03.2019 FR 1902142
(43) Date de publication de la demande: 05.01.2022
(73) Titulaire: GNI Media, 13016 Marseille (FR)
(72) Inventeur: CHEVALLIER, Nicolas, 13960 SAUSSET-LES-PINS (FR)
(74) Mandataire: Touroude & Associates
(86) Numéro de dépôt international: PCT/FR2020/000050
(87) Numéro de publication internationale: WO 2020/178491

(56) Documents cités:
- US-A1- 2005 069 112
- US-B1- 10 212 279

## Description

### DOMAINE TECHNIQUE

La présente invention concerne un procédé, mis en oeuvre sur un appareil de communication mobile, de détection de l'aboutissement d'un appel téléphonique initié depuis un navigateur internet de l'appareil. Un tel appareil de communication mobile est par exemple un téléphone mobile de type smartphone, ou encore une tablette numérique munie d'une carte SIM (de l'anglais « Subscriber Identity Module »), sans que cela ne soit limitatif dans le cadre de la présente invention.

L'invention concerne également un produit programme d'ordinateur apte à mettre en oeuvre un tel procédé.

Le document US 2005/069112 décrit un procédé utilisé dans un téléphone cellulaire utilisant un contrôleur de temps d'appel téléphonique pour déterminer la durée d'un appel conformément à des règles de plan d'appel reçues. Selon ledit procédé, pour un appel passé ou reçu avec le téléphone, le contrôleur de temps est adapté pour: (a) recevoir un ensemble de paramètres de facturation et d'informations de temps; (b) identifier un premier paramètre de charge à partir dudit ensemble de paramètres de charge qui se rapporte à une première période de ladite durée en utilisant lesdites informations temporelles; (c) amener ledit temporisateur d'appel à accumuler du temps sur ladite première période; (d) recevoir une heure prédéterminée correspondant à l'heure de fin d'une période de facturation; et (e) réinitialiser ledit temporisateur d'appel à ladite heure prédéterminée en fonction desdites informations de temps.

En outre, le document US 10 212 279 concerne un procédé d'identification et de contrôle d'appels téléphoniques indésirables comprenant les étapes de comparaison d'un numéro de téléphone d'un appel entrant avec une liste de contacts; déterminer que le numéro de téléphone n'est pas une entrée dans la liste de contacts; interroger une table partagée comprenant une liste d'un ou plusieurs numéros de téléphone uniques ayant une durée d'appel précédente et le sentiment précédent d'un utilisateur pendant un appel entrant précédent pour le numéro de téléphone de l'appel entrant; analyser la table partagée pour la durée de l'appel précédent et le sentiment précédent de l'utilisateur pendant l'appel entrant précédent pour le numéro de téléphone de l'appel entrant; et rejeter l'appel entrant en fonction de la durée de l'appel précédent étant inférieure à une durée d'appel prédéterminée et le sentiment précédent étant un sentiment négatif.

### ETAT DE LA TECHNIQUE

Dans le domaine des appareils de communication mobile équipés d'une fonction d'appel téléphonique, il existe un besoin de détecter l'aboutissement d'un appel initié depuis l'appareil. Pour ce faire, on connait des interfaces de programmation applicatives, aussi appelées API (de l'anglais « Application Programming Interface »), capables de mettre en oeuvre de tels procédés de détection. Certaines de ces API, qui fonctionnent en lien avec un système d'exploitation installé sur l'appareil de communication mobile, sont en outre capables de fournir une information indicative de la durée de l'appel téléphonique passé. Une telle information peut ensuite être transmise, soit à une application interne à l'appareil, soit à l'extérieur de ce dernier via une transmission par réseau sans fil, en vue de son usage pour différentes applications.

Toutefois, de telles solutions connues, basées sur l'exécution d'API, entrainent une consommation en ressources informatiques importante, que ce soit en ressources de traitement processeur aussi bien qu'en ressources mémoire. En effet, certaines de ces API nécessitent la mise en oeuvre d'une fonction d'écoute active d'événements, gourmande en consommation de ressources processeur et mémoire. D'autres API sont basées, pour la mise en oeuvre du procédé de détection de l'aboutissement d'un appel, sur l'installation d'objets informatiques d'écoute d'intentions (intent en anglais) du système d'exploitation. De tels objets informatiques (appelés broadcast receiver en anglais) sont actifs en permanence, même en-dehors des appels téléphoniques initiés depuis l'appareil, car ils écoutent par exemple aussi les appels reçus. Ceci entraine là encore une consommation importante en ressources processeur et mémoire.

En outre, un autre inconvénient lié à ces solutions par API réside dans le fait que de telles APl ont connaissance des numéros téléphoniques de l'appelant et de l'appelé. Ceci entraîne un risque important quant à la confidentialité et à la protection des données personnelles de l'utilisateur. Même si certaines de ces API nécessitent des permissions spéciales pour initier un appel téléphonique et/ou pour savoir si l'appel a abouti, la confidentialité des données personnelles relatives au numéro de l'appelant peut tout de même être compromise par une personne malveillante.

Enfin, certaines de ces API ne permettent pas de détecter l'aboutissement d'un appel téléphonique initié directement depuis un navigateur internet de l'appareil de communication mobile.

Il est également connu des procédés, mis en oeuvre sur des appareils de communication mobile, permettant d'établir directement une communication téléphonique entre l'appareil et un terminal externe, suite à l'initiation de l'appel correspondant depuis un navigateur internet de l'appareil. Plus précisément, cette initiation de l'appel s'effectue suite à une activation par l'utilisateur, dans une page internet de son navigateur, de données d'affichage relatives à un numéro d'appel correspondant au terminal. De tels procédés comportent une étape initiale de connexion, via le navigateur internet, à une page internet prédéterminée comprenant des données d'affichage relatives au numéro d'appel téléphonique ; une étape de détection, mise en oeuvre par les moyens de traitement, d'un événement de type clic sur les données d'affichage ; et une étape d'établissement d'une communication téléphonique entre l'appareil de communication mobile et le terminal correspondant au numéro d'appel téléphonique.

### RESUME DE L'INVENTION

L'invention a donc pour but de fournir un procédé, mis en oeuvre sur un appareil de communication mobile, permettant de détecter l'aboutissement d'un appel téléphonique initié depuis un navigateur internet de l'appareil, tout en réduisant la consommation de ressources informatiques nécessaires et en protégeant la confidentialité des données personnelles de l'utilisateur.

Un autre but de l'invention est de fournir un tel procédé, qui permette en outre d'obtenir une estimation de la durée de l'appel téléphonique lorsque ce dernier a abouti.

A cet effet, l'invention concerne un procédé, mis en oeuvre sur un appareil de communication mobile, de détection de l'aboutissement d'un appel téléphonique initié depuis un navigateur internet de l'appareil, comprenant en outre des moyens mémoire, des moyens de traitement reliés aux moyens mémoire et munis d'un compteur de temps, et des moyens de communication reliés aux moyens de traitement et comprenant des moyens d'établissement d'une communication téléphonique, le procédé comprenant une étape initiale de détection, mise en oeuvre par les moyens de traitement, d'un événement de type clic sur des données d'affichage d'une page internet prédéterminée affichée via le navigateur internet, lesdites données d'affichage étant relatives à un numéro d'appel téléphonique ; et une étape d'établissement d'une communication téléphonique entre ledit appareil de communication mobile et un terminal correspondant audit numéro d'appel téléphonique ; dans lequel le procédé comprend en outre les étapes suivantes, mises en oeuvre par les moyens de traitement :
- initialiser, au moment de la détection de l'événement de type clic, ledit compteur de temps ;
- détecter un événement prédéterminé, pré-enregistré dans les moyens mémoire ;
- arrêter ledit compteur de temps, au moment de la détection dudit événement prédéterminé ;
- si la durée enregistrée par ledit compteur de temps est comprise dans un intervalle de temps prédéterminé, déterminer que l'appel téléphonique a abouti.

Grâce aux différentes étapes mises en oeuvre dans le procédé selon l'invention, il est possible de détecter, de manière indirecte, l'aboutissement d'un appel téléphonique initié depuis le navigateur internet de l'appareil. En effet, lorsqu'un événement prédéterminé est détecté par les moyens de traitement, le produit programme stocké dans l'appareil en déduit que l'utilisateur n'est plus en communication téléphonique, puis calcule une estimation de la durée de l'appel et, si cette durée est comprise dans un intervalle de temps prédéterminé, en déduit que l'appel a abouti. Un tel événement prédéterminé est par exemple un événement de type événement d'interaction utilisateur ou remise au premier plan du processus lié au navigateur. Cette détection indirecte de l'aboutissement de l'appel téléphonique s'effectue ainsi grâce au navigateur internet de l'appareil de communication mobile lui-même, plus précisément au moyen d'un moteur du navigateur, par exemple un moteur de type JavaScript, ainsi qu'à la détection d'au moins un événement prédéterminé. Le procédé selon l'invention ne met ainsi en oeuvre aucune API, contrairement aux procédés de détection de l'art antérieur, ce qui permet une réduction substantielle de la consommation de ressources processeur et mémoire dans l'appareil. Le procédé selon l'invention permet en outre une sécurisation des données personnelles de l'utilisateur, en particulier une garantie de préserver la confidentialité de son numéro de téléphone, car le procédé fonctionne de manière entièrement anonyme et sécurisée, et ne requiert l'intervention d'aucune API ni aucune communication des numéros téléphoniques à une application tierce.

Des formes particulières du procédé de détection sont définies selon l'invention.

Selon une caractéristique technique particulière de l'invention, l'appareil comprend en outre un système d'exploitation, et le procédé comprend en outre, après l'étape d'initialisation du compteur de temps, une étape, mise en oeuvre par le système d'exploitation, consistant à mettre en premier plan le processus lié à l'établissement d'une communication téléphonique.

Selon une caractéristique technique particulière de l'invention, l'appareil comprend en outre un système d'exploitation, et le procédé comprend en outre, après l'étape d'initialisation du compteur de temps, une étape, mise en oeuvre par le système d'exploitation, consistant à mettre en arrière-plan le processus lié au navigateur internet.

Selon une caractéristique technique particulière de l'invention, le procédé comprend en outre, après l'étape d'initialisation du compteur de temps, une étape, mise en oeuvre par le système d'exploitation, consistant à inhiber tout déclenchement d'événement au sein du navigateur internet.

Selon une caractéristique technique particulière de l'invention, ledit événement prédéterminé est soit une remise au premier plan, par le système d'exploitation, du processus lié au navigateur internet, soit un événement de type interaction utilisateur.

Selon une caractéristique technique particulière de l'invention, ledit événement de type interaction utilisateur appartient à une liste prédéterminée d'événements, lesdits événements étant des événements programmés en langage JavaScript.

Selon une caractéristique technique particulière de l'invention, le procédé comprend en outre, après l'étape de détermination que l'appel téléphonique a abouti, une étape, mise en oeuvre par les moyens de traitement, consistant à stocker, dans les moyens mémoire, ladite durée comme étant la durée de l'appel. Ceci permet d'obtenir une estimation de la durée de l'appel téléphonique lorsque ce dernier a abouti.

Selon une caractéristique technique particulière de l'invention, le procédé comprend en outre, après l'étape de détermination que l'appel téléphonique a abouti, une étape, mise en oeuvre par les moyens de traitement, consistant à faire exécuter par le navigateur internet un fichier cache pour l'affichage d'une fenêtre contextuelle, notamment d'une fenêtre contextuelle comportant un questionnaire de satisfaction. Ceci permet par exemple de faire afficher, sur l'appareil de communication mobile, un questionnaire de satisfaction relatif au contenu de la conversation téléphonique.

Selon une caractéristique technique particulière de l'invention, le procédé comprend en outre, simultanément à l'étape initiale de détection d'un événement de type clic, une étape au cours de laquelle les moyens de traitement enclenchent la lecture d'un son vide, lequel son vide est pré-enregistré dans les moyens mémoire ; le procédé comprend, simultanément à l'étape d'établissement d'une communication téléphonique, une étape au cours de laquelle les moyens de traitement mettent en pause la lecture du son vide, et, au cours de l'étape de détection d'un événement prédéterminé, ledit événement prédéterminé est la reprise, par les moyens de traitement, de la lecture du son vide.

A cet effet, l'invention concerne également un produit programme d'ordinateur comportant des instructions de programme stockées dans des moyens mémoire d'un appareil de communication mobile et qui, lorsqu'exécutées par des moyens de traitement de l'appareil, sont aptes à mettre en oeuvre le procédé selon l'invention tel que décrit ci-dessus pour la détection de l'aboutissement d'un appel téléphonique initié depuis un navigateur internet de l'appareil ;

### BREVE DESCRIPTION DES FIGURES

Les buts, avantages et caractéristiques du procédé selon l'invention apparaîtront mieux dans la description suivante sur la base d'au moins une forme d'exécution non limitative illustrée par les dessins sur lesquels :
[Fig. 1] est une représentation schématique d'un appareil de communication mobile apte à mettre en oeuvre le procédé de détection selon l'invention ; et
[Fig. 2] est un logigramme représentant les étapes d'un procédé de détection de l'aboutissement d'un appel téléphonique selon l'invention.

### DESCRIPTION DETAILLEE DE L'INVENTION

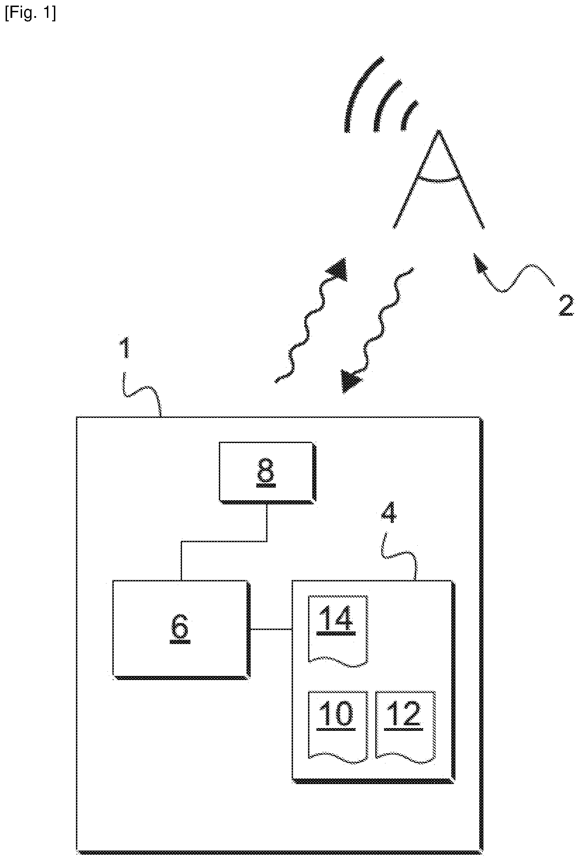

La figure 1 représente un appareil de communication mobile 1 L'appareil de communication mobile 1 est configuré pour transmettre et recevoir des données sur au moins un réseau de communication de données 2. L'appareil de communication mobile 1 est en outre configuré pour permettre l'établissement de communications téléphoniques sur un tel réseau 2. L'appareil de communication mobile 1 est par exemple un téléphone mobile de type smartphone, ou encore une tablette numérique munie d'une carte SIM (de l'anglais « Subscriber Identity Module »), sans que cette liste ne soit exhaustive.

Le réseau de communication de données 2 est muni d'une infrastructure de communication privée ou étendue permettant la connexion, ou l'accès, à des équipements de communication de type serveurs et/ou bases de données et/ou dispositifs de communication. De manière classique, l'infrastructure de communication forme un réseau sans fil, ou un réseau filaire, ou encore un réseau comprenant une portion sans fil et une portion filaire. Dans un mode de réalisation particulier, le réseau de communication de données 2 est conçu comme un réseau conforme à la norme GSM (de l'anglais « Global System for Mobile Communication ») ou GPRS (de l'anglais « General Packet Radio Service ») ou UMTS (de l'anglais « Universal Mobile Télécommunications Systems ») ; ou encore comme un réseau conforme au protocole IP, par exemple un réseau de type LTE (de l'anglais « Long Term Evolution »)-Advanced.

L'appareil de communication mobile 1 comporte des moyens mémoire 4, des moyens de traitement 6 reliés aux moyens mémoire 4, des moyens de communication 8 reliés aux moyens de traitement 6, et un navigateur internet 10 stocké dans les moyens mémoire 4. L'appareil de communication mobile 1 comporte également un système d'exploitation 12 stocké dans les moyens mémoire 4.

Outre le navigateur internet 10 et le système d'exploitation 12, les moyens mémoire 4 stockent également un programme d'ordinateur 14. Les moyens mémoire 4 sont par exemple constitués d'une mémoire non volatile reprogrammable, telle que par exemple une mémoire flash.

Les moyens de traitement 6 sont munis d'un compteur de temps, se présentant par exemple sous la forme d'une horloge matérielle ou encore d'une fonction logicielle. Les moyens de traitement 6 sont par exemple constitués d'un ou plusieurs processeur(s).

Les moyens de communication 8 comprennent des moyens d'établissement d'une communication téléphonique sur le réseau 2. Les moyens de communication 8 sont formés d'une interface de communication adaptée pour transmettre et recevoir des données sur le réseau de communication de données 2.

Le navigateur internet 10 est typiquement muni d'un moteur, par exemple un moteur de type JavaScript.

De manière classique, le système d'exploitation 12, lorsqu'il est exécuté par les moyens de traitement 6, fournit un ensemble de fonctionnalités à l'appareil de communication mobile 1 permettant à ce dernier de fonctionner.

Le produit programme d'ordinateur 14 est par exemple téléchargeable depuis un réseau de communication de données 2. Le programme d'ordinateur 14 comporte des instructions de programme adaptées pour mettre en oeuvre un procédé de détection de l'aboutissement d'un appel téléphonique initié depuis le navigateur internet 10 de l'appareil 1, comme décrit par la suite. Les instructions de programme peuvent par exemple être des instructions exécutables codées en langage JavaScript.

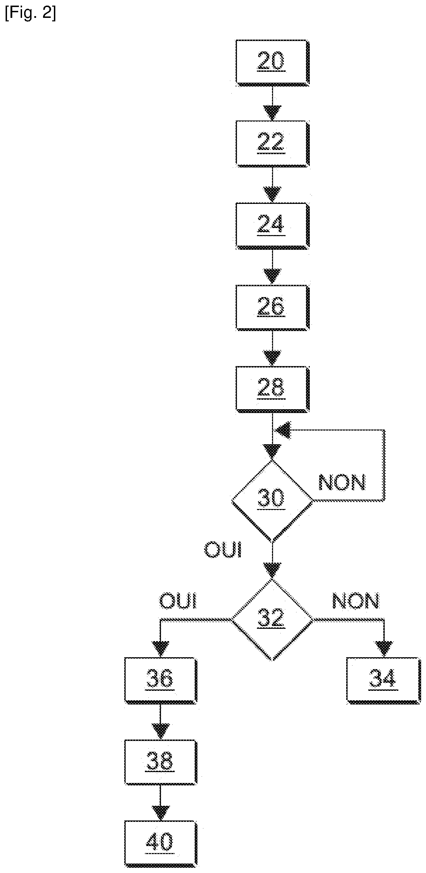

Le procédé de détection de l'aboutissement d'un appel téléphonique initié depuis le navigateur internet 10 de l'appareil 1, mis en oeuvre par l'appareil illustré à la figure 1, va maintenant être décrit en référence à la figure 2.

On suppose qu'initialement, un utilisateur de l'appareil de communication mobile 1 se connecte, via le navigateur internet 10, à une page internet prédéterminée comprenant des données d'affichage relatives à un numéro d'appel téléphonique. On suppose en outre que l'utilisateur de l'appareil 1 décide d'initier, directement depuis son navigateur internet 10, un appel téléphonique correspondant à ce numéro d'appel téléphonique. Pour ce faire, via une interface d'entrée de son appareil 1 telle que par exemple un écran tactile, l'utilisateur active les données d'affichage relatives au numéro d'appel, une telle activation pouvant par exemple prendre la forme d'un clic manuel sur ces données affichées sur l'écran tactile.

Au cours d'une étape initiale 20, les moyens de traitement 6 détectent un événement de type clic sur les données d'affichage relatives au numéro d'appel. Par « événement de type clic » on entend tout type d'événement permettant d'activer des données d'affichage interactives, tel que par exemple un bouton d'appel, un lien internet, ou encore un objet JavaScript avec un gestionnaire d'événement de type clic attaché. Cette détection d'un événement de type clic se traduit par exemple par la détection, par les moyens de traitement 6, de l'exécution d'une fonction programmée en langage JavaScript dans le moteur du navigateur internet 10. Simultanément à cette détection, les moyens de traitement 6 exécutent le programme d'ordinateur 14 en vue d'une initialisation du compteur de temps. Selon une variante de réalisation particulière, simultanément à cette étape 20 de détection, les moyens de traitement 6 enclenchent la lecture d'un son vide, lequel son vide est pré-enregistré dans les moyens mémoire 4.

De préférence, au cours d'une étape suivante 22, le système d'exploitation 12 de l'appareil 1 met en premier plan le processus lié à l'établissement de la communication téléphonique entre l'appareil 1 et un terminal correspondant au numéro d'appel téléphonique.

De préférence, au cours d'une étape simultanée ou suivante 24, le système d'exploitation 12 de l'appareil 1 met en arrière-plan le processus lié au navigateur internet 10.

De préférence, au cours d'une étape simultanée ou suivante 26, le système d'exploitation 12 de l'appareil 1 inhibe tout déclenchement d'événement au sein du navigateur internet 10.

Il est à noter que l'ordre des étapes 22 à 26 décrites ci-dessus peut être modifié indifféremment, sans sortir du cadre du procédé de détection objet de la présente invention.

Au cours d'une étape suivante 28, le système d'exploitation 12 de l'appareil 1 bascule vers une application de gestion de la téléphonie, stockée dans les moyens mémoire 4, puis lance une communication téléphonique, depuis l'appareil 1 vers un terminal correspondant au numéro d'appel téléphonique. Dans la variante de réalisation particulière selon laquelle les moyens de traitement 6 ont enclenché la lecture d'un son vide, les moyens de traitement 6 mettent en pause la lecture du son vide simultanément à cette étape 28.

Au cours d'une étape suivante 30, le programme d'ordinateur 14 détermine si un événement prédéterminé, pré-enregistré dans les moyens mémoire 4, s'est produit. Cette étape 30 correspond à une écoute dormante de la survenue de l'événement prédéterminé. Un tel événement prédéterminé est par exemple une remise au premier plan, par le système d'exploitation 12, du processus lié au navigateur internet 10. Alternativement, l'événement prédéterminé est un événement de type interaction utilisateur. Un tel événement de type interaction utilisateur appartient par exemple à une liste prédéterminée d'événements programmés en langage JavaScript. Une telle liste comprend par exemple les événements JavaScript d'interaction suivants, sans que cela ne soit exhaustif : focus ; blur ; touchstart ; scroll ; resize ; click ; visibilitychange ; pagehide ; pageshow. Ces événements JavaScript d'interaction correspondent par exemple à un utilisateur touchant l'écran tactile de l'appareil 1, ou encore redimensionnant une page internet ou une fenêtre contextuelle. Alternativement encore, l'événement prédéterminé est un événement correspondant à une reprise, par les moyens de traitement 6, de la lecture du son vide. Un tel événement est par exemple un événement programmé en langage JavaScript. Simultanément à cette détection d'un événement prédéterminé, le programme d'ordinateur 14 arrête le compteur de temps.

Lorsque le programme d'ordinateur 14 a déterminé qu'un événement prédéterminé s'est produit, il détermine, au cours d'une étape suivante 32, si la durée enregistrée par le compteur de temps est comprise dans un intervalle de temps prédéterminé. Un tel intervalle de temps est déterminé par des études préalables, et correspond à une plage temporelle dans laquelle il existe une forte probabilité qu'un appel téléphonique puisse avoir abouti et donné lieu à une conversation téléphonique.

Si la durée enregistrée par le compteur de temps n'est pas comprise dans l'intervalle de temps prédéterminé, le programme d'ordinateur 14 estime, au cours d'une étape suivante 34, que l'appel téléphonique n'a pas abouti.

Inversement, si la durée enregistrée par le compteur de temps est comprise dans l'intervalle de temps prédéterminé, le programme d'ordinateur 14 détermine, au cours d'une étape suivante 36, que l'appel téléphonique a abouti.

De préférence, au cours d'une étape suivante 38, le programme d'ordinateur 14 stocke, dans les moyens mémoire 4 de l'appareil 1, la durée enregistrée par le compteur de temps comme étant la durée de l'appel téléphonique.

De préférence, au cours d'une étape suivante 40, le programme d'ordinateur 14 fait exécuter par le navigateur internet 10 un fichier cache pour l'affichage d'une fenêtre contextuelle. Une telle fenêtre contextuelle comporte par exemple un questionnaire de satisfaction destiné à l'utilisateur de l'appareil de communication mobile 1.

On conçoit ainsi qu'un tel procédé de détection selon l'invention permet une détection indirecte de l'aboutissement d'un appel téléphonique initié depuis un navigateur internet 10 de l'appareil 1, en ne faisant intervenir que le navigateur 10 et en particulier le moteur JavaScript du navigateur 10, et ce tout en réduisant la consommation de ressources informatiques nécessaires et en protégeant la confidentialité des données personnelles de l'utilisateur. En effet, la consommation des moyens mémoire 4 et des moyens de traitement 6 est nulle pendant toute la durée de la communication téléphonique, contrairement aux solutions de détection de l'aboutissement d'un appel téléphonique de l'art antérieur, et notamment des solutions basées sur l'exécution d'API.

## Revendications

1. Procédé, mis en oeuvre sur un appareil de communication mobile (1), de détection de l'aboutissement d'un appel téléphonique initié depuis un navigateur internet (10) de l'appareil (1), l'appareil (1) comprenant en outre des moyens mémoire (4), des moyens de traitement (6) reliés aux moyens mémoire (4) et munis d'un compteur de temps, et des moyens de communication (8) reliés aux moyens de traitement (6) et comprenant des moyens d'établissement d'une communication téléphonique, le procédé comprenant une étape initiale (20) de détection, mise en oeuvre par les moyens de traitement (6), d'un événement de type clic sur des données d'affichage d'une page internet prédéterminée affichée via le navigateur internet (10), lesdites données d'affichage étant relatives à un numéro d'appel téléphonique ; et une étape (28) d'établissement d'une communication téléphonique entre ledit appareil de communication mobile (1) et un terminal correspondant audit numéro d'appel téléphonique ;
**caractérisé en ce que** le procédé comprend en outre les étapes suivantes, mises en oeuvre par les moyens de traitement (6) :
• initialiser, au moment de la détection (20) de l'événement de type clic, ledit compteur de temps ;
• détecter (30) un événement prédéterminé, pré-enregistré dans les moyens mémoire (4) ;
• arrêter ledit compteur de temps, au moment de la détection (30) dudit événement prédéterminé ;
• si la durée enregistrée par ledit compteur de temps est comprise dans un intervalle de temps prédéterminé, déterminer (36) que l'appel téléphonique a abouti.

2. Procédé selon la revendication 1, **caractérisé en ce que** l'appareil (1) comprend en outre un système d'exploitation (12), et **en ce que** le procédé comprend en outre, après l'étape d'initialisation du compteur de temps, une étape (22), mise en oeuvre par le système d'exploitation (12), consistant à mettre en premier plan le processus lié à l'établissement d'une communication téléphonique.

3. Procédé selon la revendication 1 ou 2, **caractérisé en ce que** l'appareil (1) comprend en outre un système d'exploitation (12), et **en ce que** le procédé comprend en outre, après l'étape d'initialisation du compteur de temps, une étape (24), mise en oeuvre par le système d'exploitation (12), consistant à mettre en arrière-plan le processus lié au navigateur internet (10).

4. Procédé selon l'une quelconque des revendications précédentes, **caractérisé en ce que** le procédé comprend en outre, après l'étape d'initialisation du compteur de temps, une étape (26), mise en oeuvre par le système d'exploitation (12), consistant à inhiber tout déclenchement d'événement au sein du navigateur internet (10).

5. Procédé selon la revendication 3 ou 4, **caractérisé en ce que** ledit événement prédéterminé est soit une remise au premier plan, par le système d'exploitation (12), du processus lié au navigateur internet (10), soit un événement de type interaction utilisateur.

6. Procédé selon la revendication 5, **caractérisé en ce que** ledit événement de type interaction utilisateur appartient à une liste prédéterminée d'événements, lesdits événements étant des événements programmés en langage JavaScript.

7. Procédé selon l'une quelconque des revendications précédentes, **caractérisé en ce que** le procédé comprend en outre, après l'étape (36) de détermination que l'appel téléphonique a abouti, une étape (38), mise en oeuvre par les moyens de traitement (6), consistant à stocker, dans les moyens mémoire (4), ladite durée comme étant la durée de l'appel.

8. Procédé selon l'une quelconque des revendications précédentes, **caractérisé en ce que** le procédé comprend en outre, après l'étape (36) de détermination que l'appel téléphonique a abouti, une étape (40), mise en oeuvre par les moyens de traitement (6), consistant à faire exécuter par le navigateur internet (10) un fichier cache pour l'affichage d'une fenêtre contextuelle, notamment d'une fenêtre contextuelle comportant un questionnaire de satisfaction.

9. Procédé selon l'une quelconque des revendications précédentes, **caractérisé en ce que** le procédé comprend en outre, simultanément à l'étape initiale (20) de détection d'un événement de type clic, une étape au cours de laquelle les moyens de traitement (6) enclenchent la lecture d'un son vide, lequel son vide est pré-enregistré dans les moyens mémoire (4) ; **en ce que** le procédé comprend, simultanément à l'étape (28) d'établissement d'une communication téléphonique, une étape au cours de laquelle les moyens de traitement (6) mettent en pause la lecture du son vide, et **en ce que**, au cours de l'étape (30) de détection d'un événement prédéterminé, ledit événement prédéterminé est la reprise, par les moyens de traitement (6), de la lecture du son vide.

10. Produit programme d'ordinateur (14) comportant des instructions de programme stockées dans des moyens mémoire (4) d'un appareil de communication mobile (1) et qui, lorsqu'exécutées par des moyens de traitement (6) de l'appareil (1), sont aptes à mettre en oeuvre le procédé selon l'une quelconque des revendications précédentes, pour la détection de l'aboutissement d'un appel téléphonique initié depuis un navigateur internet (10) de l'appareil (1).

## Patentansprüche

1. Verfahren, das in einer mobilen Kommunikationsvorrichtung (1) ausgeführt wird, zum Erkennen der Beendigung eines Telefonanrufs, der von einem Web-Browser (10) der Vorrichtung (1) initiiert wurde, die Vorrichtung (1) ferner umfassend Speichermittel (4), Verarbeitungsmittel (6), die mit den Speichermitteln (4) verbunden und mit einem Zeitzähler versehen sind, und Kommunikationsmittel (8), die mit den Verarbeitungsmitteln (6) verbunden sind und umfassend Mittel zum Aufbau einer Telefonkommunikation, das Verfahren umfassend einen durch die Verarbeitungsmittel (6) ausgeführten Anfangsschritt (20) zum Erkennen eines Ereignisses einer Klickart in den Anzeigedaten einer vorbestimmten Webseite, die über den Web-Browser (10) angezeigt wird, wobei sich die Anzeigedaten auf eine Telefonrufnummer beziehen; und einen Schritt (28) des Aufbaus einer Telefonkommunikation zwischen der mobilen Kommunikationsvorrichtung (1) und einem Endgerät, das der Telefonrufnummer entspricht;
**dadurch gekennzeichnet, dass** das Verfahren ferner die folgenden Schritte umfasst, die durch die Verarbeitungsmittel (6) ausgeführt werden:
• Initialisieren des Zeitzählers zu dem Zeitpunkt der Erkennung (20) des Ereignisses der Klickart;
• Erkennen (30) eines vorbestimmten Ereignisses, das vorab in den Speichermitteln (4) abgespeichert wurde;
• Anhalten des Zeitzählers zu dem Zeitpunkt der Erkennung (30) des vorbestimmten Ereignisses;
• wenn die durch den Zeitzähler abgespeicherte Dauer innerhalb eines vorbestimmten Zeitintervalls liegt, Bestimmen (36), dass der Telefonanruf beendet wurde.

2. Verfahren nach Anspruch 1, **dadurch gekennzeichnet, dass** die Vorrichtung (1) ferner ein Betriebssystem (12) umfasst, und dass das Verfahren ferner nach dem Schritt des Initialisierens des Zeitzählers einen Schritt (22) umfasst, der durch das Betriebssystem (12) ausgeführt wird, der darin besteht, den Prozess, der mit dem Aufbau einer Telefonkommunikation zusammenhängt, in den Vordergrund zu stellen.

3. Verfahren nach Anspruch 1 oder 2, **dadurch gekennzeichnet, dass** die Vorrichtung (1) ferner ein Betriebssystem (12) umfasst, und dass das Verfahren ferner nach dem Schritt des Initialisierens des Zeitzählers einen Schritt (24) umfasst, der durch das Betriebssystem (12) ausgeführt wird, der darin besteht, den Prozess, der mit dem Web-Browser (10) zusammenhängt, in den Hintergrund zu stellen.

4. Verfahren nach einem der vorstehenden Ansprüche,
**dadurch gekennzeichnet, dass** das Verfahren ferner nach dem Schritt der Initialisierung des Zeitzählers einen Schritt (26) umfasst, der durch das Betriebssystem (12) ausgeführt wird, der darin besteht, jede Auslösung des Ereignisses in dem Web-Browser (10) zu unterbinden.

5. Verfahren nach Anspruch 3 oder 4, **dadurch gekennzeichnet, dass** das vorbestimmte Ereignis entweder eine Rückstellung des mit dem Web-Browser (10) zusammenhängenden Prozesses durch das Betriebssystem (12) in den Vordergrund oder ein Ereignis von einem Typ einer Benutzerinteraktion ist.

6. Verfahren nach Anspruch 5, **dadurch gekennzeichnet, dass** das Ereignis von dem Typ der Benutzerinteraktion zu einer vorbestimmten Liste von Ereignissen gehört, wobei die Ereignisse in der Programmiersprache JavaScript programmiert sind.

7. Verfahren nach einem der vorstehenden Ansprüche,
**dadurch gekennzeichnet, dass** das Verfahren ferner nach dem Schritt (36) der Bestimmung, dass der Telefonanruf beendet wurde, einen Schritt (38) umfasst, der durch die Verarbeitungsmittel (6) ausgeführt wird, der darin besteht, in den Speichermitteln (4) die Dauer als die Dauer des Anrufs einzuspeichern.

8. Verfahren nach einem der vorstehenden Ansprüche,
**dadurch gekennzeichnet, dass** das Verfahren ferner nach dem Schritt (36) der Bestimmung, dass der Telefonanruf beendet wurde, einen Schritt (40) umfasst, der durch die Verarbeitungsmittel (6) ausgeführt wird, der darin besteht, den Web-Browser (10) eine Cache-Datei für die Anzeige eines Popup-Fensters, insbesondere eines Popup-Fensters, das einen Zufriedenheitsfragebogen aufweist, durchführen zu lassen.

9. Verfahren nach einem der vorstehenden Ansprüche,
**dadurch gekennzeichnet, dass** das Verfahren ferner gleichzeitig mit dem Anfangsschritt (20) der Erkennung eines Ereignisses der Klickart einen Schritt umfasst, in dessen Verlauf die Verarbeitungsmittel (6) die Wiedergabe eines leeren Tons einleiten, wobei der leere Ton in den Speichermitteln (4) vorab abgespeichert ist; dass das Verfahren gleichzeitig mit dem Schritt (28) des Aufbaus einer Telefonkommunikation einen Schritt umfasst, in dessen Verlauf die Verarbeitungsmittel (6) die Wiedergabe des leeren Tons unterbrechen, und dass im Verlauf des Schritts (30) der Erkennung eines vorbestimmten Ereignisses das vorbestimmte Ereignis die Wiederaufnahme der Wiedergabe des leeren Tons durch die Verarbeitungsmittel (6) ist.

10. Computerprogrammprodukt (14), das Programmanweisungen aufweist, die in Speichermitteln (4) einer mobilen Kommunikationsvorrichtung (1) eingespeichert sind und die, wenn sie durch Verarbeitungsmittel (6) der Vorrichtung (1) durchgeführt werden, geeignet sind, das Verfahren nach einem der vorstehenden Ansprüche auszuführen, um die Beendigung eines Telefonanrufs zu erkennen, der von einem Web-Browser (10) der Vorrichtung (1) initiiert wurde.

## Claims

1. Method, implemented on a mobile communication device (1), for detecting the success of a telephone call initiated from a web browser (10) of the device (1), the device (1) further comprising memory means (4), processing means (6) which are connected to the memory means (4) and provided with a time counter, and communication means (8) which are connected to the processing means (6) and comprise means for establishing a telephone communication, the method comprising an initial step (20) of detecting, implemented by the processing means (6), a click event on display data of a predetermined web page displayed via the web browser (10), said display data relating to a telephone number; and a step (28) of establishing a telephone communication between said mobile communication device (1) and a terminal corresponding to said telephone number;
**characterized in that** the method further comprises the following steps, implemented by the processing means (6):
• initializing said time counter when the click event is detected (20);
• detecting (30) a predetermined event which is pre-stored in the memory means (4);
• stopping said time counter when said predetermined event is detected (30);
• if the time recorded by said time counter is within a predetermined time interval, determining (36) that the telephone call has been successful.

2. Method according to claim 1, **characterized in that** the device (1) further comprises an operating system (12), **and in that** the method further comprises, after the step of initializing the time counter, a step (22), implemented by the operating system (12), consisting in foregrounding the process linked to establishing a telephone communication.

3. Method according to either claim 1 or claim 2, **characterized in that** the device (1) further comprises an operating system (12), **and in that** the method further comprises, after the step of initializing the time counter, a step (24), implemented by the operating system (12), consisting in backgrounding the process linked to the web browser (10).

4. Method according to any of the preceding claims, **characterized in that** the method further comprises, after the step of initializing the time counter, a step (26), implemented by the operating system (12), consisting in inhibiting any triggering of an event within the web browser (10).

5. Method according to either claim 3 or claim 4, **characterized in that** said predetermined event is either once again foregrounding, by the operating system (12), the process linked to the web browser (10), or a user interaction event.

6. Method according to claim 5, **characterized in that** said user interaction event belongs to a predetermined list of events, said events being events programmed in JavaScript language.

7. Method according to any of the preceding claims, **characterized in that** the method further comprises, after the step (36) of determining that the telephone call has been successful, a step (38), implemented by the processing means (6), consisting in storing said duration in the memory means (4) as the duration of the call.

8. Method according to any of the preceding claims, **characterized in that** the method further comprises, after the step (36) of determining that the telephone call has been successful, a step (40), implemented by the processing means (6), consisting in executing, by the web browser (10), a cache file for displaying a pop-up window, in particular a pop-up window including a satisfaction questionnaire.

9. Method according to any of the preceding claims, **characterized in that** the method further comprises, simultaneously with the initial step (20) of detecting a click event, a step during which the processing means (6) initiate the playback of an empty sound, which empty sound is pre-stored in the memory means (4), **in that** the method comprises, simultaneously with the step (28) of establishing a telephone communication, a step during which the processing means (6) pause the playback of the empty sound, **and in that,** during the step (30) of detecting a predetermined event, said predetermined event is the resumption of the playback of the empty sound by the processing means (6).

10. Computer program product (14) which includes program instructions stored in memory means (4) of a mobile communication device (1) and which, when executed by processing means (6) of the device (1), are capable of implementing the method according to any of the preceding claims for detecting the success of a telephone call initiated from a web browser (10) of the device (1).
